# EUROPÄISCHE PATENTANMELDUNG

(11) **EP 2 767 740 A1**
(43) Veröffentlichungstag der Anmeldung: **20.08.2014**
(21) Anmeldenummer: 14150871.3
(22) Anmeldetag: 13.01.2014
(51) Int. Cl.: F16H 63/20, F16H 63/30

(54) **Schalteinrichtung mit einer Schalt- und Wählwelle für ein Fahrzeuggetriebe**

(30) Priorität: 13.02.2013 DE 102013202272
(71) Anmelder: ZF Friedrichshafen AG, 88038 Friedrichshafen (DE)
(72) Erfinder: Rother, Sylva, 88079 Kressbronn (DE); Giessner, Andreas Sylvester, 88045 Friedrichshafen (DE)

(57) **Zusammenfassung**

Es wird eine Schalteinrichtung mit einer Schalt- und Wählwelle (1) für ein Fahrzeuggetriebe vorgeschlagen, wobei die Schalt- und Wählwelle (1) über eine eine Wählgasse (2) und mehrere Schaltgassen (3, 4, 5, 6, 7) aufweisende Kulissenführung (8) zum Wählen und Schalten von Gangstufen betätigbar ist, wobei die Wählbewegung und Schaltbewegung der Schalt- und Wählwelle (1) auf Schaltgabeln (9) zum Betätigen von den Schaltgassen (3, 4, 5, 6, 7) zugeordneten Schaltelementen übertragbar ist, und wobei die Schalt- und Wählwelle (1) mit zumindest einer Schaltgabel (9) derart in Wirkverbindung steht, dass bei dieser Schaltgabel (9) zwischen den Schaltbewegungen zum Betätigen der zugeordneten Schaltelemente eine Wählbewegung vorgesehen ist.

## Beschreibung

Die vorliegende Erfindung betrifft eine Schalteinrichtung mit einer Schalt- und Wählwelle für ein Fahrzeuggetriebe gemäß der im Oberbegriff des Patentanspruches 1 näher definierten Art.

Schalteinrichtungen für Handschaltgetriebe oder auch für automatische und automatisierte Getriebe weisen eine Schalt- und Wählwelle auf, die um eine Drehachse zum Ausführen einer Wählbewegung drehbar und zum Ausführen einer Schaltbewegung axial verschiebbar gelagert ist. Zum Wählen und Schalten von Gangstufen ist eine Kulissenführung mit einem Schaltbild umfassend eine Wählgasse und mehrere Schaltgassen vorgesehen, über die die Schalt- und Wählwelle zum Wählen und Schalten von Gangstufen betätigbar ist. Je nachdem wie viele Gangstufen über die Schalteinrichtung schaltbar sind, wird ein entsprechendes Schaltbild ausgewählt, wobei jeder Schaltgasse ausgehend von der Wählgasse zwei Schaltstufen zugeordnet sind, wobei die Wählbewegung und Schaltbewegung der Schalt- und Wählwelle beispielsweise auf Schaltgabeln zum Betätigen der den Schaltgassen zugeordneten Schaltelemente übertragbar ist.

Beispielsweise aus der Druckschrift DE 10 2010 029 864 A1 ist eine Anordnung mit einer Kulissenführung bzw. einem Mitnehmerelement einer Schalteinrichtung bekannt, bei der die Bewegungen eines Wählhebels und eines Schalthebels über das Mitnehmerelement auf die Schalt- und Wählwelle zum Betätigen von Schaltelementen übertragen wird. Bei der bekannten Anordnung ist das Mitnehmerelement als Multifunktionsbauteil mit zumindest einer Funktionsfläche zum Ausführen zusätzlicher Funktionen bei einem Wähl- und Schaltvorgang ausgeführt.

Beispielsweise bei einem Getriebe mit acht Gangstufen, nämlich sieben Vorwärtsgangstufen und einer Rückwärtsgangstufe, sind vier Schaltgassen vorgesehen, wobei jeder Schaltgasse die gegenüberliegenden Gangstufenpaare G1/G2, G3/G4, G5/G6 und G7/R zugeordnet sind und durch eine axiale Bewegung der Schaltwelle in die jeweilige Richtung der Schaltgasse geschaltet werden können. Hieraus ergibt sich, dass die siebente Vorwärtsgangstufe und die Rückwärtsgangstufe einer gemeinsamen Schaltgasse zugeordnet sind. Um Fehlschaltungen bei einem derartigen Schaltbild zwischen der siebenten Vorwärtsgangstufe und der Rückwärtsgangstufe zu verhindern, ist in nachteiliger Weise eine zusätzliche Gangsperre für diese Schaltgasse erforderlich, welches jedoch zusätzliche Bauteile und Kosten erfordert. Demzufolge ist es wünschenswert, die siebente Vorwärtsgangstufe und die Rückwärtsgangstufe unterschiedlichen Schaltgassen zuzuordnen. Hierbei ergibt sich jedoch der Nachteil, dass zusätzliche Schaltgabeln und Schalteinrichtungen erforderlich sind.

Der vorliegenden Erfindung liegt die Aufgabe zu Grunde, eine Schalteinrichtung der eingangs beschriebenen Gattung vorzuschlagen, bei der die Rückwärtsgangstufe in einer von den Vorwärtsgangstufen getrennten Schaltgasse angeordnet ist, ohne dass zum Schalten zusätzliche Schaltgabeln und Schalteinrichtungen erforderlich sind.

Diese Aufgabe wird erfindungsgemäß durch die Merkmale des Patentanspruches 1 gelöst, wobei sich weitere Vorteile und vorteilhafte Ausführungen aus den Unteransprüchen, der Beschreibung und den Zeichnungen ergeben.

Es wird eine Schalteinrichtung für ein Handschaltgetriebe, ein automatisiertes oder ein automatisches Getriebe für ein Fahrzeug vorgeschlagen, wobei die Schalteinrichtung zumindest eine Schalt- und Wählwelle zum Wählen und Schalten von Gangstufen aufweist, die über eine zumindest eine Wählgasse und mehrere Schaltgassen aufweisende Kulissenführung betätigt wird. Die Schalt- und Wählwelle überträgt nach erfolgter Wählbewegung die Schaltbewegung auf die jeweils zugeordneten Schaltgabeln zum Betätigen der den entsprechenden Schaltgassen zugeordneten Schaltelemente. Erfindungsgemäß ist vorgesehen, dass die Schalt- und Wählwelle mit zumindest einer Schaltgabel derart in Wirkverbindung steht, dass bei dieser Schaltgabel zwischen den Schaltbewegungen zum Betätigen der beiden zugeordneten Schaltelemente eine Wählbewegung vorgesehen ist. Auf diese Weise wird verhindert, dass der Fahrer unbeabsichtigt zwischen den beiden der Schaltgabel zugeordneten Gangstufen schaltet, da zum Schalten der Gangstufen jeweils eine Wählbewegung vorgeschaltet ist.

Gemäß einer vorteilhaften Ausführungsvariante der Erfindung ist vorgesehen, dass die Wirkverbindung zwischen der Schalt- und Wählwelle und der jeweils zugeordneten Schaltgabel über mehrere drehfest mit der Schaltwelle verbundene Schaltbolzen erfolgt, die in Wählrichtung, also über den Umfangsbereich der Schalt- und Wählwelle in einem vorbestimmten Winkel voneinander beabstandet sind. Die Schaltbolzen stehen nach erfolgter Wählbewegung zum Übertragen der Schaltbewegung mit der Schaltgabel in Wirkverbindung. Bei einer derartig mit der Schalt- und Wählwelle koppelbaren Schaltgabel ergibt sich der Vorteil, dass auch unterschiedlichen Schaltgassen zugeordnete Gangstufen über diese Schaltgabel schaltbar sind. Dadurch werden zusätzliche Bauteile und Kosten bei der erfindungsgemäß vorgeschlagenen Schalteinrichtung eingespart.

Die Wirkverbindung zwischen den Schaltbolzen und der Schaltgabel kann entweder direkt oder auch über Ausnehmungen, Nuten oder dergleichen an einem oder mehreren Schaltgabelblechen der Schaltgabel realisiert werden, so dass die Schaltbolzen am Ende einer zugeordneten Wählbewegung zumindest einer Ausnehmung oder Nut zumindest eines Schaltgabelbleches derart zugeordnet sind, dass bei der anschließenden Schaltbewegung der Schalt- und Wählwelle das zugeordnete Schaltelement durch die Schaltgabel betätigt wird. Es sind auch andere Führungen bzw. Mitnehmer für die Schaltbolzen zum Übertragen der Schaltbewegung auf die Schaltgabel denkbar. Bei der Verwendung eines Schaltgabelbleches kann dieses einteilig oder als separates Bauteil an die Schaltgabel z.B. angeformt sein.

Vorzugsweise kann bei der vorgeschlagenen Schalteinrichtung eine Kulissensteuerung mit einem Schaltbild für zum Beispiel acht Gangstufen einschließlich der Rückwärtsgangstufe mit beispielsweise fünf über eine Wählgasse verbundenen Schaltgassen eingesetzt werden. Beispielsweise kann die erste Schaltgasse dem Rückwärtsgang und die letzte Schaltgasse der siebenten Vorwärtsgangstufe zugeordnet sein. Es sind aber auch andere Anwendungen denkbar, bei denen entsprechend des anzusteuernden Getriebes andere Schaltbilder bei der Kulissensteuerung eingesetzt werden.

Nachfolgend wird die vorliegende Erfindung anhand der Figuren weiter erläutert. Es zeigen:
Fig. 1 eine schematische Ansicht einer ersten Ausführungsvariante einer erfindungsgemäßen Schalteinrichtung;
Fig. 2 eine schematische Schnittansicht entlang der Schnittlinie A bis A gemäß Fig: 1;
Fig. 3 eine dreidimensionale schematische Teilansicht der Schalt- und Wählwelle mit zwei in einer gemeinsamen axialen Ebene liegenden Schaltbolzen;
Fig. 4 eine schematische Ansicht einer zweiten Ausführungsvariante der Schalteinrichtung mit zwei in unterschiedlichen axialen Ebenen liegenden Schaltbolzen und zwei separaten Schaltblechen;
Fig. 5 eine schematische Ansicht einer dritten Ausführungsvariante der Schalteinrichtung mit zwei in unterschiedlichen axialen Ebenen liegenden Schaltbolzen und einem gemeinsamen Schaltgabelblech;
Fig. 6 eine geschnittene Ansicht gemäß Fig. 5 in einer Neutralposition der Schalt- und Wählwelle;
Fig. 7 eine geschnittene Ansicht gemäß Fig. 5 in der der siebten Vorwärtsgangstufe zugeordneten Schaltgasse der Schalt- und Wählwelle;
Fig. 8 eine geschnittene Ansicht gemäß Fig. 5 in der der Rückwärtsgangstufe zugeordneten Schaltgasse der Schalt- und Wählwelle; und
Fig. 9 ein beispielhaftes Schaltbild der Kulissensteuerung der erfindungsgemäßen Schalteinrichtung.

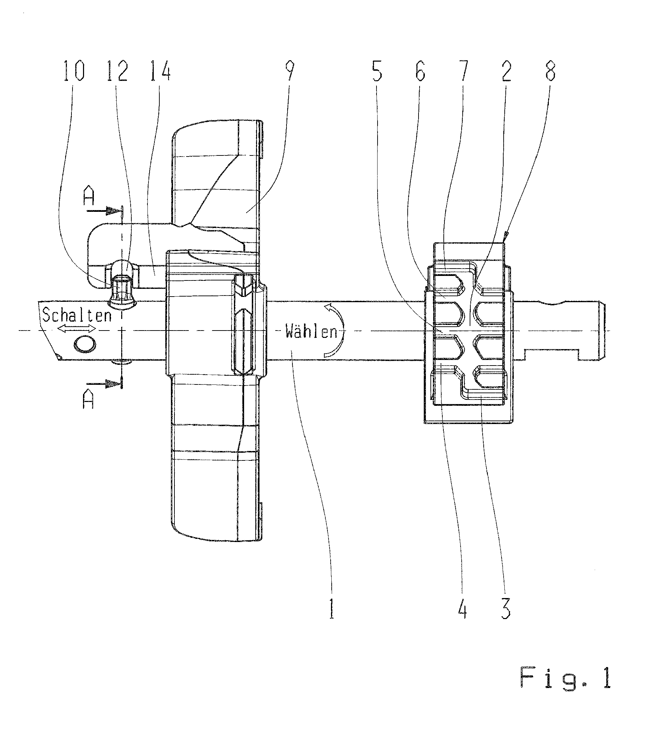

In den Figuren sind verschiedene Ausführungsvarianten einer erfindungsgemäßen Schalteinrichtung für ein Fahrzeuggetriebe dargestellt. Die Schalteinrichtung umfasst eine Schalt- und Wählwelle 1, die über eine eine Wählgasse 2 und fünf Schaltgassen 3, 4, 5, 6, 7 aufweisende Kulissenführung 8 zum Wählen und Schalten von Gangstufen G1 bis G7 sowie R betätigbar ist. Die Schalt- und Wählwelle 1 wird über die Kulissenführung 8 bei der Wählbewegung gedreht, wie durch einen Pfeil Wählen in Fig. 1 angedeutet. Bei Schaltbewegungen wird die Schalt- und Wählwelle 1 axial, in der Zeichnungsebene nach links und rechts bewegt, welches ebenfalls durch einen Pfeil Schalten in Fig. 1 angedeutet ist.

Die Wählbewegung und Schaltbewegung der Schalt- und Wählwelle 1 wird auf die Schaltgabeln zum Betätigen von den Schaltgassen 3, 4, 5, 6, 7 zugeordneten Schaltelementen übertragen, wobei lediglich nur eine Schaltgabel 9 beispielhaft dargestellt ist, die der ersten Schaltgasse 3 bzw. der Rückwärtsgangstufe R und der fünften Schaltgasse 7 bzw. der siebenten Vorwärtsgangstufe G7 zugeordnet ist. Die weiteren nicht dargestellten Schaltgabeln sind jeweils einer der weiteren Schaltgassen 4, 5, 6 in üblicher Weise zugeordnet. Die von der Schaltgabel 9 zum Einlegen und Auslegen der zugeordneten Gangstufen vorgesehenen üblichen Schaltelemente bzw. Synchronisierungen sind in den Figuren nicht weiter dargestellt.

Vorzugsweise wird jeweils einem Gangstufenpaar G1/G2, G3/G4, G5/G6 und G7/R jeweils ein doppeltwirkendes Schaltelement bzw. eine doppeltwirkende Synchronisierung für beide Schaltstufen zugeordnet.

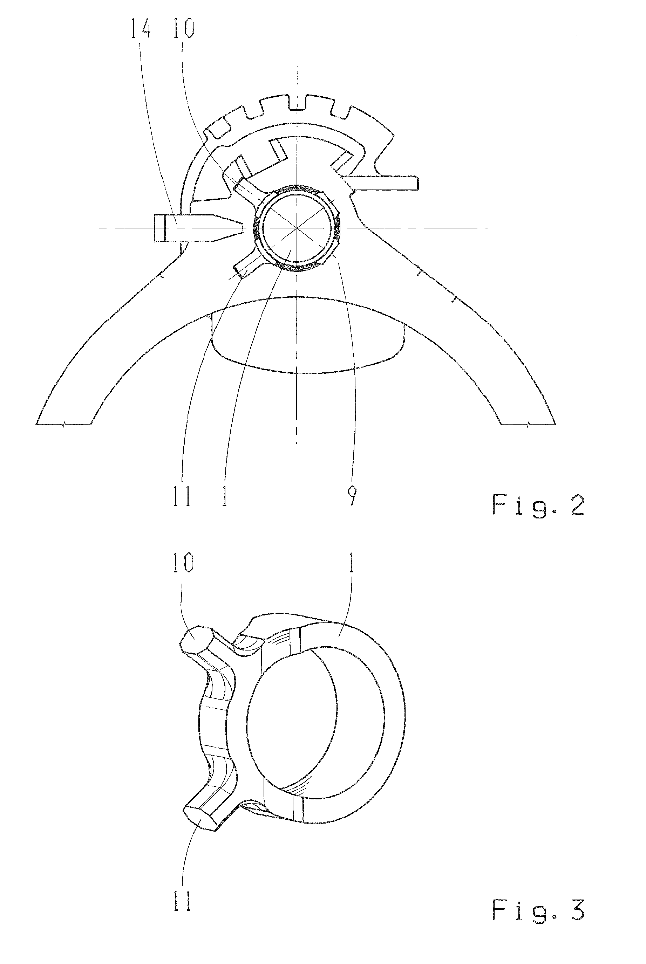

Dadurch, dass bei der erfindungsgemäß vorgeschlagenen Schalteinrichtung die Schalt- und Wählwelle 1 mit zumindest einer Schaltgabel 9 derart in Wirkverbindung steht, dass bei dieser Schaltgabel 9 zwischen den Schaltbewegungen zum Betätigen des zugeordneten Schaltelementes eine Wählbewegung vorgesehen ist, werden Fehlschaltungen zwischen der der Schaltgabel 9 zugeordneten siebenten Vorwärtsgangstufe G7 und der Rückwärtsgangstufe R sicher verhindert. Unabhängig von den verschiedenen Ausführungsvarianten wird die Wirkverbindung zwischen der Schalt- und Wählwelle 1 und der zugeordneten Schaltgabel 9 durch zwei drehfest an der Schalt- und Wählwelle 1 befestigte Schaltbolzen 10, 11 (Fig. 3) realisiert, die mit der Schaltgabel 9 in Wirkverbindung bringbar sind, wobei die beiden Schaltbolzen 10, 11 in einem vorbestimmten Winkel am Umfang der Schalt- und Wählwelle 1 voneinander beabstandet sind.

Gemäß Fig. 1 ist eine erste Ausführungsvariante der erfindungsgemäßen Schalteinrichtung gezeigt, bei der die beiden Schaltbolzen 10, 11 in einer gemeinsamen axialen Ebene der Schalt- und Wählwelle 1 angeordnet sind. Beide Schaltbolzen 10, 11 sind derselben gemeinsamen Ausnehmung 12 in einem Schaltgabelblech 14 der Schaltgabel 9 am Ende der jeweiligen Wählbewegung zugeordnet. Der Winkel zwischen den beiden Schaltbolzen 10, 11 ist derart gewählt, dass die beiden Schaltbolzen 10, 11 am Ende der zugeordneten Wählbewegung der Schalt- und Wählwelle 1 jeweils in Wirkverbindung mit der Ausnehmung 12 stehen, so dass bei der anschließenden Schaltbewegung der Schalt- und Wählwelle 1 das zugeordnete Schaltelement zum Schalten der siebenten Vorwärtsgangstufe G7 in der Zeichnungsebene gemäß Fig. 1 nach links und zum Schalten der Rückwärtsgangstufe R in der Zeichnungsebene nach rechts durch eine entsprechende Axialbewegung der Schalt- und Wählwelle 1 bewegt wird.

In Fig. 2 ist eine Schnittdarstellung der Schalt- und Wählwelle 1 gezeigt, in der sich die Schaltbolzen 10, 11 der Schalt- und Wählwelle 1 in der Neutralposition befinden, welches etwa einer mittigen Position in der Wählgasse 2 der Kulissenführung entspricht, so dass weder der eine Schaltbolzen 10 noch der andere Schaltbolzen 11 der Ausnehmung 12 am Schaltgabelblech 14 zugeordnet bzw. mit dieser in Wirkverbindung steht.

In Fig. 3 ist eine dreidimensionale schematische Teilansicht der Schalt- und Wählwelle 1 mit in einer axialen Ebene liegenden Schaltbolzen 10, 11 gezeigt.

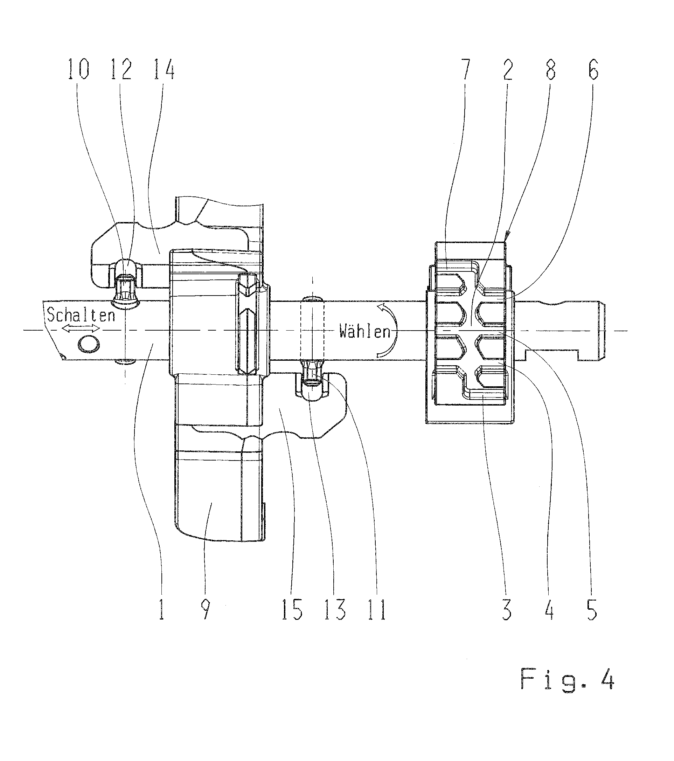

Fig. 4 zeigt eine zweite Ausführungsvariante der erfindungsgemäßen vorgeschlagenen Schalteinrichtung 1, bei der die Schaltbolzen 10, 11 in unterschiedlichen axialen Ebenen der Schalt- und Wählwelle 1 drehfest an dieser angeordnet sind. Die Schaltbolzen 10 und 11 sind wieder in einem vorbestimmten Winkel am Umfang der Schalt- und Wählwelle 1 drehfest angeordnet, so dass am Ende der jeweiligen Wählbewegung entweder die erste Schaltgasse 3 zum Schalten der Rückwärtsgangstufe R oder die fünfte Schaltgasse 7 zum Schalten der siebenten Vorwärtsgangstufe G7 erreicht wird. Jeder Schaltbolzen 10, 11 ist einer separaten Ausnehmung 12, 13 zugeordnet. Die Ausnehmungen 12, 13 sind jeweils in separaten Schaltgabelblechen 14, 15 an der Schaltgabel 9 vorgesehen. Um die erforderliche Wählbewegung zwischen den unterschiedlichen Schaltgassen 3 und 7 zugeordneten Gangstufen G7 und R zu ermöglichen, ist das eine Schaltgabelblech 14 in der Zeichnungsebene oben an der Schalt- und Wählwelle 1 und das zweite Schaltgabelblech 15 in der Zeichnungsebene unten an der Schalt- und Wählwelle 1 an jeweils einander abgewandten Seiten der Schaltgabel 9 angeordnet.

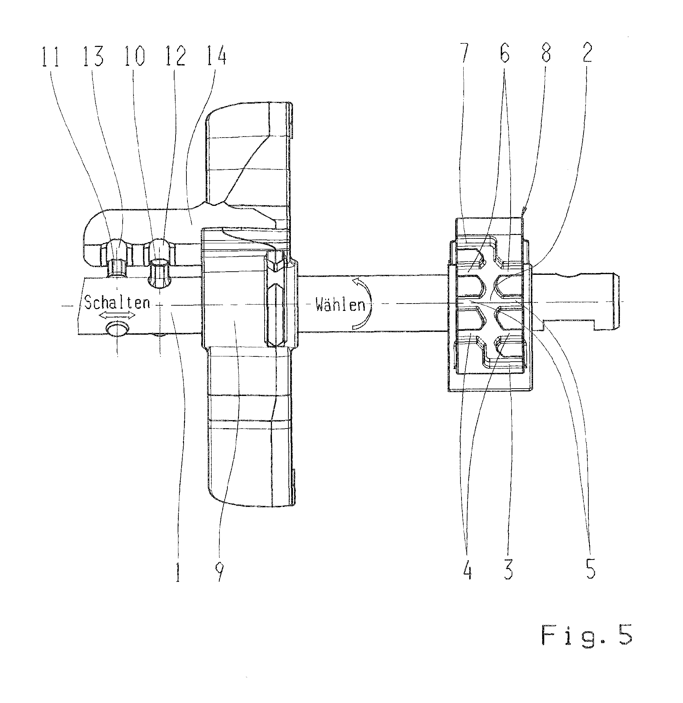

In Fig. 5 ist eine dritte Ausführungsvariante der erfindungsgemäßen Schalteinrichtung dargestellt, bei der die Schaltbolzen 10 und 11 wieder in unterschiedlichen axialen Ebenen der Schalt- und Wählwelle 1 angeordnet sind. Jedoch sind im Unterschied zur zweiten Ausführungsvariante die separaten Ausnehmungen 12, 13 einem gemeinsamen Schaltgabelblech 14 angeordnet. Die Schaltbolzen 10 und 11 sind wieder in einem vorbestimmten Winkel am Umfang der Schalt- und Wählwelle 1 drehfest angeordnet, so dass am Ende der jeweiligen Wählbewegung entweder die erste Schaltgasse 3 zum Schalten der Rückwärtsgangstufe R oder die fünfte Schaltgasse 7 zum Schalten der siebenten Vorwärtsgangstufe G7 erreicht wird. Wenn sich die jeweiligen Schaltbolzen 10 und 11 in der zugeordneten Ausnehmung 12, 13 befinden, wird durch die Axialbewegung der Schalt- und Wählwelle 1 die Schaltgabel 9 zum Einlegen der Gangstufe G7 oder R in der Zeichnungsebene nach links oder rechts bewegt.

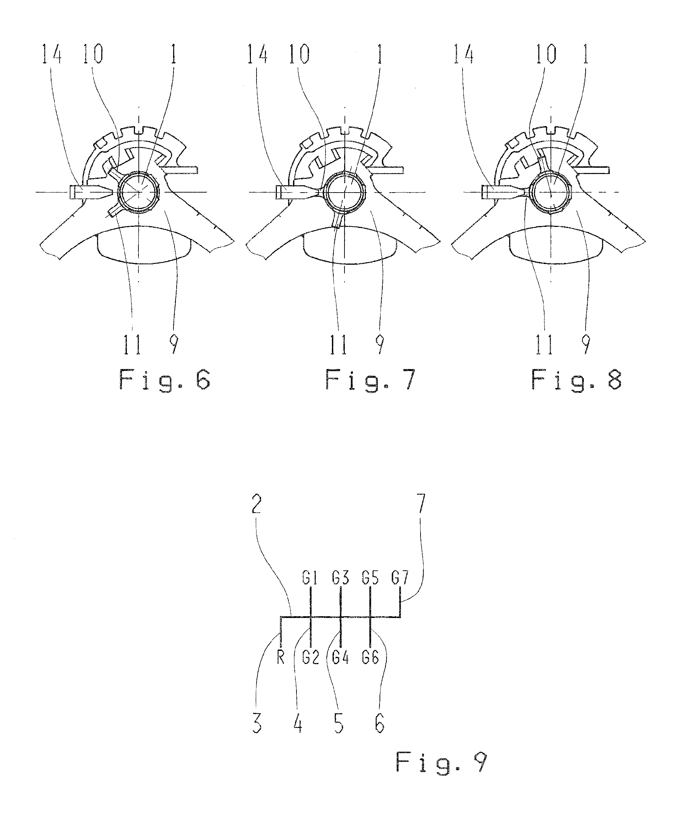

In den Fig. 6 bis 8 sind die verschiedenen Positionen der Schalt- und Wählwelle 1 dargestellt.

Fig. 6 zeigt die Position Neutral. Hierbei befindet sich die Kulissenführung 8 in der Wählgasse 2. In Fig. 7 ist die Position gezeigt, bei der sich die Kulissenführung 8 in der fünften Schaltgasse 7 zum Schalten der siebenten Vorwärtsgangstufe G7 befindet. Fig. 8 zeigt die Position, bei der sich die Kulissenführung 8 in der ersten Schaltgasse 3 zum Schalten der Rückwärtsgangstufe R befindet.

Schließlich zeigt Fig. 9 beispielhaft das Schaltbild der Kulissenführung 8 mit den fünf Schaltgassen 3, 4, 5, 6, 7 mit den zugeordneten Gangstufen R, G1/G2, G3/G4, G5/G6, G7 und der die Schaltgassen 3, 4, 5, 6, 7 verbindenden Wählgasse 2.

### Bezugszeichen

- 1: Schalt- und Wählwelle
- 2: Wählgasse
- 3: erste Schaltgasse R
- 4: zweite Schaltgasse G1/G2
- 5: dritte Schaltgasse G3/G4
- 6: vierte Schaltgasse G5/G6
- 7: fünfte Schaltgasse G7
- 8: Kulissenführung
- 9: Schaltgabel
- 10: Schaltbolzen
- 11: Schaltbolzen
- 12: Ausnehmung bzw. Nut
- 13: Ausnehmung bzw. Nut
- 14: Schaltgabelblech
- 15: Schaltgabelblech
- G1: erste Vorwärtsgangstufe
- G2: zweite Vorwärtsgangstufe
- G3: dritte Vorwärtsgangstufe
- G4: vierte Vorwärtsgangstufe
- G5: fünfte Vorwärtsgangstufe
- G6: sechste Vorwärtsgangstufe
- G7: siebente Vorwärtsgangstufe
- R: Rückwärtsgangstufe

## Patentansprüche

1. Schalteinrichtung mit einer Schalt- und Wählwelle (1) für ein Fahrzeuggetriebe, wobei die Schalt- und Wählwelle (1) über eine eine Wählgasse (2) und mehrere Schaltgassen (3, 4, 5, 6, 7) aufweisende Kulissenführung (8) zum Wählen und Schalten von Gangstufen betätigbar ist, und wobei die Wählbewegung und Schaltbewegung der Schalt- und Wählwelle (1) auf Schaltgabeln (9) zum Betätigen von den Schaltgassen (3, 4, 5, 6, 7) zugeordneten Schaltelementen übertragbar ist, **dadurch gekennzeichnet, dass** die Schalt- und Wählwelle (1) mit zumindest einer Schaltgabel (9) derart in Wirkverbindung steht, dass bei dieser Schaltgabel (9) zwischen den Schaltbewegungen zum Betätigen der zugeordneten Schaltelemente eine Wählbewegung vorgesehen ist.

2. Schalteinrichtung nach Anspruch 1, **dadurch gekennzeichnet, dass** die Schalt- und Wählwelle (1) zumindest zwei drehfest angeordnete und derselben Schaltgabel (9) zugeordnete Schaltbolzen (10, 11) aufweist, die in Umfangsrichtung in einem vorbestimmten Winkel voneinander beabstandet angeordnet sind und mit der Schaltgabel (9) zum Übertragen der Schaltbewegung der Schalt- und Wählwelle (1) koppelbar sind.

3. Schalteinrichtung nach Anspruch 2, **dadurch gekennzeichnet, dass** die Schaltbolzen (10, 11) am Ende einer zugeordneten Wählbewegung der Schalt- und Wählwelle (1) zumindest einer Ausnehmung (12, 13) eines Schaltgabelbleches (14, 15) der Schaltgabel (9) derart zugeordnet sind, dass bei der anschließenden Schaltbewegung der Schalt- und Wählwelle (1) das zugeordnete Schaltelement durch die Schaltgabel (9) betätigbar ist.

4. Schalteinrichtung nach Anspruch 3, **dadurch gekennzeichnet, dass** die zumindest zwei Schaltbolzen (10, 11) in einer gemeinsamen axialen Ebene der Schaltund Wählwelle (1) angeordnet sind, wobei beiden Schaltbolzen (10, 11) eine gemeinsame Ausnehmung (12) in dem Schaltgabelblech (14) der Schaltgabel (9) zuordenbar ist.

5. Schalteinrichtung nach Anspruch 3, **dadurch gekennzeichnet, dass** die zumindest zwei Schaltbolzen (10, 11) in unterschiedlichen axialen Ebenen der Schaltund Wählwelle (1) angeordnet sind, wobei jedem Schaltbolzen (10, 11) eine separate Ausnehmung (12, 13) in einem separaten Schaltgabelblech (14, 15) zugeordnet ist.

6. Schalteinrichtung nach Anspruch 3, **dadurch gekennzeichnet, dass** die zumindest zwei Schaltbolzen (10, 11) in unterschiedlichen axialen Ebenen der Schaltund Wählwelle (1) angeordnet sind, wobei jedem Schaltbolzen (10, 11) eine separate Ausnehmung (12, 13) in einem gemeinsamen Schaltgabelblech (14) zugeordnet ist.

7. Schalteinrichtung nach einem der Ansprüche 3 bis 6, **dadurch gekennzeichnet, dass** jedes Schaltgabelblech (14, 15) einteilig oder als separates Bauteil an die Schaltgabel (9) angeformt ist.

8. Schalteinrichtung nach einem der vorangehenden Ansprüche, **dadurch gekennzeichnet, dass** mit der Schalt- und Wählwelle (1) acht Gangstufen über die Kulisse mit fünf Schaltgassen (3, 4, 5, 6, 7) mit nur vier Schaltgabeln (9) bzw. Schaltelementen schaltbar sind.

9. Schalteinrichtung nach einem der vorangehenden Ansprüche, **dadurch gekennzeichnet, dass** über die Schaltgabel (9) eine siebente Vorwärtsgangstufe (G7) und eine Rückwärtsgangstufe (R) über ein der Schaltgabel (9) zugeordnetes Schaltelement oder über eine der Schaltgabel (9) zugeordnete Synchronisierung schaltbar sind, wobei die siebente Vorwärtsgangstufe (G7) und die Rückwärtsgangstufe (R) unterschiedlichen Schaltgassen (3, 7) zugeordnet sind.
